# EUROPEAN PATENT APPLICATION

(11) **EP 4 322 264 A1**
(43) Date of publication of application: **14.02.2024**
(21) Application number: 21940666.7
(22) Date of filing: 17.05.2021
(51) Int. Cl.: H01M 4/66, H01M 10/052, H01M 10/0567, H01M 10/0568, H01M 10/0569

(54) **NON-AQUEOUS ELECTROLYTE AND NON-AQUEOUS ELECTROLYTE SECONDARY BATTERY USING SAME**

(71) Applicant: Central Glass Co., Ltd., Yamaguchi 755-0001 (JP)
(72) Inventor: MORINAKA, Takayoshi, Ube-shi, Yamaguchi 755-0001 (JP); KAWABATA, Wataru, Ube-shi, Yamaguchi 755-0001 (JP); TAKAHASHI, Mikihiro, Ube-shi, Yamaguchi 755-0001 (JP)
(74) Representative: Manitz Finsterwald Patent- und Rechtsanwaltspartnerschaft mbB
(86) International application number: PCT/JP2021/018585
(87) International publication number: WO 2022/244046

(57) **Abstract**

Provided are a novel non-aqueous electrolyte solution capable of suppressing an increase in initial resistance and a non-aqueous electrolyte secondary battery using the same. The non-aqueous electrolyte solution comprises (I) a compound represented by the following general formula [1a]; (II) a solute; and (III) a non-aqueous organic solvent.

M⁺[X-S(=O)₂-N-C(=O)-R]⁻ [1a]

(in the general formula [1a], X represents a halogen atom, R represents an -CN group or an -OCN group, and M⁺ represents an alkali metal ion).

## Description

### Technical Field:

The present disclosure relates to a non-aqueous electrolyte solution and a non-aqueous electrolyte solution secondary battery using it.

### Background Technology:

As means for improving the durability of non-aqueous electrolyte solution secondary batteries, optimization of various battery components including active materials of positive and negative electrodes has been studied so far. Non-aqueous electrolyte solutions are no exception, and it has been proposed to form a solid electrolyte interface (SEI) at the interface between an electrode and the electrolyte solution by various additives and suppress deterioration due to decomposition of the electrolyte solution on the surface of the active positive or negative electrode.

For example, Patent Literature 1 discloses, as a non-aqueous electrolyte solution that can constitute a lithium battery that is excellent in battery characteristics such as cycle characteristics, battery capacity, storage characteristics, and conductivity, a non-aqueous electrolyte solution, in which an electrolyte is dissolved in a non-aqueous solvent, for lithium batteries, wherein the non-aqueous electrolyte solution further contains a nitrile compound and an S=O group-containing compound.

It is also disclosed that when a dinitrile compound is used as the nitrile compound, it is also preferable that the dinitrile compound is not used in combination with the S=O group-containing compound.

### Prior Art:

### Patent Literature

Patent Literature 1:
Japanese Unexamined Patent Application Publication (JP-A-)No. 2009-266825A1

### Summary of Invention:

### Subject to be attained by the invention:

However, the present inventors found that, when a non-aqueous electrolyte solution including a nitrile compound is used as described in Patent Literature 1, probably due to the formation of a protective film on the metal surface for suppressing corrosion, the elution of the copper component as a metal of the negative electrode current collector into the electrolyte solution during over-discharge can be reduced, but there is a problem that the initial resistance increases.

Accordingly, an object of the present invention is to provide a new non-aqueous electrolyte solution that can suppress an increase in the initial resistance and a non-aqueous electrolyte solution secondary battery using it. Means for attaining the subject to be attained by the invention:

The present inventors found as a result of intensive studies for the purpose of resolving the above problem that in a non-aqueous electrolyte solution including a solute and a non-aqueous organic solvent, the increase of the initial resistance can be suppressed by using a nitrile compound having a specific structure, and arrived at the present invention.

That is, the present inventors found that the above problem can be solved by the following technical construction.
[1] A non-aqueous electrolyte solution comprising:
   (I) a compound represented by the following general formula [1a];
   (II) a solute; and
   (III) a non-aqueous organic solvent,

      M⁺[X-S(=O)₂-N-C(=O)-R]- [1a]

      (in the general formula [1a], X represents a halogen atom, R represents a -CN group or an -OCN group, and M⁺ represents an alkali metal ion).
[2] The non-aqueous electrolyte solution according to the above [1], wherein X in the general formula [1a] is a fluorine atom.
[3] The non-aqueous electrolyte solution according to the above [1] or [2], wherein the concentration of the (I) is 0.01 to 5.00 mass% with respect to the total amount of the electrolyte solution.
[4] The non-aqueous electrolyte solution according to any one of the above [1] to [3], wherein the (II) is at least one selected from the group consisting of LiPF₆, LiBF₄, LiSbF₆, LiAsF₆, LiClO₄, LiCF₃SO₃, LiC₄F₉SO₃, LiAlO₂, LiAlCl₄, LiCl, and LiI or at least one selected from the group consisting of NaPF₆, NaBF₄, NaSbF₆, NaAsF₆, NaClO₄, NaCF₃SO₃, NaC₄F₉SO₃, NaAlO₂, NaAlCl₄, NaCl, and NaI.
[5] The non-aqueous electrolyte solution according to any one of the above [1] to [4], wherein the (III) is at least one selected from the group consisting of a cyclic ester, a chain ester, a cyclic ether, a chain ether, a sulfone compound, a sulfoxide compound, and an ionic liquid.
[6] The non-aqueous electrolyte solution according to the above [5], wherein the (III) is a cyclic ester, and the cyclic ester is a cyclic carbonate.
[7] The non-aqueous electrolyte solution according to the above [5], wherein the (III) is a chain ester, and the chain ester is a chain carbonate.
[8] The non-aqueous electrolyte solution according to any one of the above [1] to [7], further comprising at least one additive selected from the group consisting of difluoro(oxalato)borate, bis(oxalato)borate, tetrafluoro(oxalato)phosphate, difluorobis(oxalato)phosphate, tris(oxalato)phosphate, difluorophosphate, fluorosulfonate, bis(fluorosulfonyl)imide salt, vinylene carbonate, an oligomer of vinylene carbonate (number average molecular weight in terms of polystyrene: 170 to 5000), vinyl ethylene carbonate, fluoroethylene carbonate, 1,6-diisocyanatohexane, ethynylethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylene methane disulfonate, 1,2-ethanedisulfonic acid anhydride, methanesulfonyl fluoride, tris(trimethylsilyl)borate, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, and cyclohexylbenzene.
[9] The non-aqueous electrolyte solution according to any one of the above [1] to [8], to be used in a non-aqueous electrolyte solution secondary battery including a current collector containing copper.
[10] A non-aqueous electrolyte solution secondary battery at least comprising a positive electrode, a negative electrode, a separator, and the non-aqueous electrolyte solution according to any one of the above [1] to [9].
[11] The non-aqueous electrolyte solution secondary battery according to the above [10], wherein the negative electrode includes copper as a current collector.

### Effect of the invention:

According to the present disclosure, it is possible to provide a new non-aqueous electrolyte solution that can suppress an increase in the initial resistance and a non-aqueous electrolyte solution secondary battery using it.

### Embodiments for carrying out the invention:

The present disclosure will now be described in detail, but the description of the technical elements described below is an example of the embodiments of the present disclosure, and the scope of the present disclosure is not limited to these specific embodiments. Various modifications thereof can be made within the scope of the gist of the present disclosure. [0010]
1. Non-aqueous electrolyte solution:
   The non-aqueous electrolyte solution of the present disclosure includes (I) a compound represented the following general formula [1a], (II) a solute, and (III) a non-aqueous organic solvent.

   M⁺[X-S(=O)₂-N-C(=O)-R]⁻ [1a]

   (in the general formula [1a], X represents a halogen atom, R represents a -CN group or an -OCN group, and M⁺ represents an alkali metal ion)

### (I) Compound represented by the general formula [1a]:

It is thought that the compound represented by the general formula [1a] above is partially decomposed at the interface between the positive electrode and the electrolyte solution and the interface between the negative electrode and the electrolyte solution, to form a film. It is assumed that this film suppresses the direct contact between the non-aqueous organic solvent or the solute and the active material, to prevent the decomposition of the non-aqueous organic solvent and the solute and to suppress the deterioration of the battery performance.

While the mechanism that, when the compound represented by the general formula [1a] is used in a non-aqueous electrolyte solution, the increase of the initial resistance can be suppressed when such non-aqueous electrolyte solution is used in a non-aqueous electrolyte solution secondary battery is not clear, the present inventors assume as follows.

As described above, it is thought that the compound represented by the general formula [1a] is partially decomposed at the interface between the positive electrode and the electrolyte solution and the interface between the negative electrode and the electrolyte solution, to form a coating film. It is assumed that this film not only has an effect of preventing the decomposition of the non-aqueous organic solvent and the solute by suppressing the direct contact between the non-aqueous organic solvent or the solute and the active material, but also has conductivity of cations such as lithium ions and sodium ions to suppress an increase in the initial resistance.

In the present invention, the initial resistance is the resistance of a cell after conditioning of the cell under arbitrary conditions, and this resistance value is preferable as small as possible.

In the general formula [1a], X represents a halogen atom.

Examples of the halogen atom represented by X include a fluorine atom, a bromine atom, and an iodine atom. In particular, from the viewpoint of lower battery resistance, the fluorine atom is preferable.

In the general formula [1a], R represents a -CN group or an -OCN group.

In the general formula [1a], M⁺ represents an alkali metal ion.

Examples of the alkali metal ion represented by M⁺ include a lithium ion, a sodium ion, or a potassium ion, and a lithium ion and a sodium ion are preferable. In a lithium ion battery, a lithium ion is much preferable, and in a sodium ion battery, a sodium ion is much preferable.

Examples of the compound represented by the general formula [1a] include, but not limited to, the following compounds:

LiN(SO₂F) (COCN) ;

LiN(SO₂ F) (CO(OCN)) ;

NaN (SO₂ F) (COCN) ;

NaN(SO₂ F) (CO(OCN)) ;

LiN (SO₂Cl) (COCN) ;

LiN (SO₂Cl) (CO (OCN)) ;

NaN(SO₂Cl) (COCN) ; and

NaN (SO₂Cl) (CO (OCN)).

The compound represented by the general formula [1a] may be used alone or in combination of two or more thereof.

The concentration of the compound represented by the general formula [1a] in the non-aqueous electrolyte solution is preferably 0.01 to 5.00 mass%, more preferably 0.1 to 2.0 mass%, with respect to the total amount of the electrolyte solution. An effect of suppressing an increase in the initial resistance in a non-aqueous electrolyte solution secondary battery is easily obtained by adjusting the concentration of the compound represented by the general formula [1a] to 0.01 mass% or more. In addition, the film formed on an electrode does not become too thick by adjusting the concentration to 5.00 mass% or less, which is unlikely to lead to an increase in the resistance.

The compound represented by the general formula [1a] can be manufactured by various methods. The manufacturing method is not particularly limited.

For example, there is mentioned a method by reacting a corresponding halogenated sulfonyl isocyanate and a corresponding cyanide salt or cyanate in the absence of a solvent or in a solvent that does not react with them.

### (II) Solute:

Specific examples of the solute to be used in the non-aqueous electrolyte solution of the present disclosure, in cases of a lithium battery and a lithium ion battery, include electrolyte salts represented by LiPF₆, LiBF₄, LiSbF₆, LiAsF₆, LiClO₄, LiCF₃SO₃, LiC₄F₉SO₃, LiAlO₂, LiAlCl₄, LiCl, LiI, LiC (CF₃SO₂)₃, LiPF₃(C₃F₇)₃, LiB(CF₃)₄, LiBF₃(C₂F₅), and so on, and in a case of a sodium ion battery, include electrolyte salts represented by NaPF₆, NaBF₄, NaSbF₆, NaAsF₆, NaClO₄, NaCF₃SO₃, NaC₄F₉SO₃, NaAlO₂, NaAlCl₄, NaCl, NaI, NaC (CF₃SO₂)₃, NaPF₃(C₃F₇)₃, NaB(CF₃)₄, NaBF₃(C₂F₅), and so on. The solute may be used alone or may be used in any combination thereof at any ratio of two or more thereof according to the purpose.

In cases of a lithium battery and a lithium ion battery, preferred is at least one selected from the group consisting of LiPF₆, LiBF₄, LiSbF₆, LiAsF₆, LiClO₄, LiCF₃SO₃, LiC₄F₉SO₃, LiAlO₂, LiAlCl₄, LiCl, and LiI, and in a case of a sodium ion battery, preferred is at least one selected from the group consisting of NaPF₆, NaBF₄, NaSbF₆, NaAsF₆, NaClO₄, NaCF₃SO₃, NaC₄F₉SO₃, NaAlO₂ , NaAlCl₄, NaCl, and NaI.

In particular, in view of energy density, output characteristics, life span and so on of a battery, in cases of a lithium battery and a lithium ion battery, it is preferable to contain at least LiPF₆ as the above (II). When LiPF₆ and another component (II) are used, the component (II) other than LiPF₆ is preferably at least one selected from the group consisting of LiBF₄, LiSbF₆, LiAsF₆, LiClO₄, LiCF₃SO₃, LiC₄F₉SO₃, LiAlO₂, LiAlCl₄, LiCl, and LiI.

In a case of a sodium ion battery, it is preferable to contain at least NaPF₆ as the above (II). When NaPF₆ and another component (II) are used, the component (II) other than NaPF₆ is preferably at least one selected from the group consisting of NaBF₄, NaSbF₆, NaAsF₆, NaClO₄, NaCF₃SO₃, NaC₄F₉SO₃, NaAlO₂, NaAlCl₄, NaCl, and NaI.

The concentration of the solute (II) is not particularly limited, but a suitable lower limit is 0.5 mol/L or more, preferably 0.7 mol/L or more, and further preferably 0.9 mol/L or more, and a suitable upper limit is 2.5 mol/L or less, preferably 2.0 mol/L or less, and much preferably 1.5 mol/L or less.

The solution temperature when the solute is dissolved in a non-aqueous organic solvent is not particularly limited, but is preferably -20°C to 80°C and much preferably 0°C to 60°C.

### (III) Non-aqueous organic solvent:

The type of the non-aqueous organic solvent (III) is not particularly limited, and any non-aqueous organic solvent can be used. Examples thereof include the following non-aqueous organic solvents.

Examples of the cyclic ester include γ-butyrolactone and γ-valerolactone in addition to cyclic carbonates such as propylene carbonate (hereinafter, may be referred to as "PC"), ethylene carbonate (hereinafter, may be referred to as "EC"), and butylene carbonate.

Examples of the chain ester include methyl acetate, methyl propionate, and ethyl propionate (hereinafter, may be referred to as "EP") in addition to chain carbonates such as diethyl carbonate (hereinafter, may be referred to as "DEC"), dimethyl carbonate (hereinafter, may be referred to as "DMC"), and ethyl methyl carbonate (hereinafter, may be referred to as "EMC").

Examples of the cyclic ether include tetrahydrofuran, 2-methyltetrahydrofuran, and dioxane.

Examples of the chain ether include dimethoxyethane and diethyl ether.

In addition, the examples thereof include sulfone compounds and sulfoxide compounds, such as dimethylsulfoxide and sulfolane, and also include an ionic liquid.

The above (III) is preferably at least one selected from the group consisting of a cyclic ester, a chain ester, a cyclic ether, a chain ether, a sulfone compound, a sulfoxide compound, and ionic liquid.

As one preferable aspect, the above (III) includes a cyclic ester, and the cyclic ester is a cyclic carbonate. As another preferable embodiment, the above (III) includes a chain ester, and the chain ester is a chain carbonate.

The non-aqueous organic solvent to be used in the present disclosure may be used alone or may be used in any combination thereof at any ratio of two or more thereof according to the purpose. Among them, from the viewpoint of the electrochemical stability against redox and the chemical stability related to heat and reaction with the above solute, particularly preferred are propylene carbonate, ethylene carbonate, diethyl carbonate, dimethyl carbonate, ethyl methyl carbonate, methyl propionate, and ethyl propionate.

For example, the non-aqueous organic solvent preferably contains one or more cyclic carbonates having a high dielectric constant and one or more chain carbonates having a low liquid viscosity or chain esters other than a chain carbonate, as the ion conductivity of the electrolyte solution is enhanced. Specifically, it is much preferable to include any of the following combinations.

(1) a combination of EC and EMC;
(2) a combination of EC and DEC;
(3) a combination of EC, DMC, and EMC;
(4) a combination of EC, DEC, and EMC;
(5) a combination of EC, EMC, and EP;
(6) a combination of PC and DEC;
(7) a combination of PC and EMC;
(8) a combination of PC and EP;
(9) a combination of PC, DMC, and EMC;
(10) a combination of PC, DEC, and EMC;
(11) a combination of PC, DEC, and EP;
(12) a combination of PC, EC, and EMC;
(13) a combination of PC, EC, DMC, and EMC;
(14) a combination of PC, EC, DEC, and EMC; and
(15) a combination of PC, EC, EMC, and EP.

### Other additives:

While the above is the description of the basic technical elements of the non-aqueous electrolyte solution of the present invention, the non-aqueous electrolyte solution of the present disclosure may contain an additive that is generally used at an arbitrary ratio as long as it does not impart the gist of the present disclosure.

Specific examples thereof include compounds having an over-charge preventing effect, a negative electrode film forming effect, and a positive electrode protecting effect, such as vinylene carbonate (hereinafter, may be referred to as "VC"), an oligomer of vinylene carbonate (number average molecular weight in terms of polystyrene: 170 to 5000), vinyl ethylene carbonate, fluoroethylene carbonate (hereinafter, may be referred to as "FEC"), 1,6-diisocyanatohexane, ethynylethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylene methanedisulfonate, 1,2-ethanedisulfonic acid anhydride, methane sulfonyl fluoride, tris(trimethylsilyl)borate, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, cyclohexylbenzene, biphenyl, difluoroanisole, and dimethylvinylene carbonate.

In addition, a carboxylate such as lithium acrylate, sodium acrylate, lithium methacrylate, and sodium methacrylate or a sulfate such as lithium methyl sulfate, sodium methyl sulfate, lithium ethyl sulfate, and sodium methyl sulfate may be added.

The non-aqueous electrolyte solution can also be used after pseudo solidification using a gelling agent or a crosslinked polymer as when used in a non-aqueous electrolyte solution secondary battery called a lithium polymer battery.

The non-aqueous electrolyte solution of the present disclosure may include a compound represented by any of the following general formulae [1] to [5], difluoro(oxalato)borate, bis(oxalato)borate, tetrafluoro(oxalato)phosphate, difluorobis(oxalato)phosphate, tris(oxalato)phosphate, difluorophosphate, fluorosulfonate, or the like.

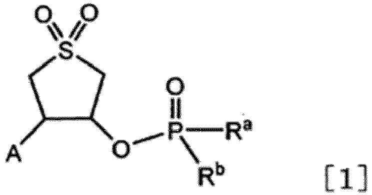

[In the general formula [1],
R^{a} and R^{b} each independently represent a fluorine atom, a C1-8 alkyl group which may be substituted with a halogen atom, a C2-6 alkenyl group which may be substituted with a halogen atom, a C2-6 alkynyl group which may be substituted with a halogen atom, a C6-10 aryl group which may be substituted with a halogen atom, a C1-8 alkoxy group which may be substituted with a halogen atom, a C2-6 alkenyloxy group which may be substituted with a halogen atom, a C2-6 alkynyloxy group which may be substituted with a halogen atom, or a C6-10 aryloxy group which may be substituted with a halogen atom; and
A represents a hydrogen atom or a halogen atom.]

In the present invention, the expression of "may be substituted with a halogen atom" means that at least one of the hydrogen atoms of the alkyl group and so on as R^{a} or R^{b} may be substituted with a halogen atom.

Examples of the C1-8 alkyl group which may be substituted with a halogen atom as R^{a} or R^{b} in the general formula [1] include a methyl group, an ethyl group, an n-propyl group, an isopropyl group, an n-butyl group, an isobutyl group, a tert-butyl group, a trifluoromethyl group, and a trifluoroethyl group. In particular, preferred is a methyl group.

Examples of the C2-6 alkenyl group which may be substituted with a halogen atom as R^{a} or R^{b} in the general formula [1] include a vinyl group, an allyl group, an isopropenyl group, a 1-butenyl group, a 2-butenyl group, a 3-butenyl group, an isobutenyl group, and a 1,1-difluoro-1-propenyl group. In particular, preferred is an allyl group which may be substituted with a halogen atom.

Examples of the C2-6 alkynyl group which may be substituted with a halogen atom as R^{a} or R^{b} in the general formula [1] include a 1-propynyl group, a 2-propynyl group, a 1-butynyl group, a 2-butynyl group, and a 3-butynyl group. In particular, preferred is a 2-propynyl group which may be substituted with a halogen atom.

Examples of the C6-10 aryl group which may be substituted with a halogen atom as R^{a} or R^{b} in the general formula [1] include a phenyl group, a tosyl group, a xylyl group, a naphthyl group, a trifluorophenyl group, and a pentafluorophenyl group.

Examples of the C1-8 alkoxy group which may be substituted with a halogen atom as R^{a} or R^{b} in the general formula [1] include a methoxy group, an ethoxy group, an n-propoxy group, an isopropoxy group, an n-butoxy group, an isobutoxy group, a tert-butoxy group, a trifluoromethoxy group, and a trifluoroethoxy group. In particular, a C1-3 alkoxy group is preferable, and a methoxy group is particularly preferable.

Examples of the C2-6 alkenyloxy group which may be substituted with a halogen atom as R^{a} or R^{b} in the general formula [1] include an allyloxy group, a 1-methyl-2-propenyloxy group, a 2-methyl-2-propenyloxy group, a 2-butenyloxy group, a 3-butenyloxy group, and a propenyloxy group. In particular, preferred are a C2-4 alkenyloxy group and an allyloxy group.

Examples of the C2-6 alkynyloxy group which may be substituted with a halogen atom as R^{a} or R^{b} in the general formula [1] include a 2-propynyloxy group, a 1-methyl-2-propynyloxy group, a 2-methyl-2-propynyloxy group, a 2-butynyloxy group, and a 3-butynyloxy group. In particular, preferred are a C2-4 alkynyloxy group and a 2-propynyloxy group.

Examples of the C6-10 aryloxy group which may be substituted with a halogen atom as R^{a} or R^{b} in the general formula [1] include a phenoxy group, a 2-methylphenoxy group, a 3-methylphenoxy group, a 4-methylphenoxy group, a 2-ethylphenoxy group, a 3-ethylphenoxy group, a 4-ethylphenoxy group, a 2-methoxyphenoxy group, a 3-methoxyphenoxy group, and a 4-methoxyphenoxy group. In particular, preferred is a phenoxy group which may be substituted with a halogen atom.

The "halogen atom" of R^{a} or R^{b} of the general formula [1] is preferably a fluorine atom from the viewpoint of battery resistance.

Examples of the "halogen atom" represented by A of the general formula [1] include a fluorine atom, a bromine atom, and an iodine atom. In particular, a fluorine atom is preferable from the viewpoint of lower battery resistance.

Examples of the compound represented by the general formula [1] include 3-(difluorophosphinyloxy)tetrahydrothiophene-1,1-dioxide, 3-dimethylphosphinyloxytetrahydrothiophene-1,1-dioxide, 3-diethylphosphinyloxytetrahydrothiophene-1,1-dioxide, 3-bis-trifluoromethylphosphinyloxytetrahydrothiophene-1,1-dioxide, 3-diphenylphosphinyloxytetrahydrothiophene-1,1-dioxide, 3-bis-allylphosphinyloxytetrahydrothiophene-1,1-dioxide, 3-divinylphosphinyloxytetrahydrothiophene-1,1-dioxide, 3-dipropargylphosphinyloxytetrahydrothiophene-1,1-dioxide, 3-dimethoxyphosphinyloxytetrahydrothiophene-1,1-dioxide, 3-diethoxyphosphinyloxytetrahydrothiophene-1,1-dioxide, 3-diphenoxyphosphinyloxytetrahydrothiophene-1,1-dioxide, 3-bis-trifluoromethoxyphosphinyloxytetrahydrothiophene-1,1-dioxide, 3-bis-allyloxyphosphinyloxytetrahydrothiophene-1,1-dioxide, 3-bis-cyclohexyloxyphosphinyloxytetrahydrothiophene-1,1-dioxide, 3-dimethylphosphinyloxy-4-fluorotetrahydrothiophene-1,1-dioxide, 3-diethylphosphinyloxy-4-fluorotetrahydrothiophene-1,1-dioxide, 3-bis-trifluoromethylphosphinyloxy-4-fluorotetrahydrothiophene-1,1-dioxide, 3-diphenylphosphinyloxy-4-fluorotetrahydrothiophene-1,1-dioxide, 3-diallylphosphinyloxy-4-fluorotetrahydrothiophene-1,1-dioxide, 3-divinylphosphinyloxy-4-fluorotetrahydrothiophene-1,1-dioxide, 3-dipropargylphosphinyloxy-4-fluorotetrahydrothiophene-1,1-dioxide, 3-dimethoxyphosphinyloxy-4-fluorotetrahydrothiophene-1,1-dioxide, 3-diethoxyphosphinyloxy-4-fluorotetrahydrothiophene-1,1-dioxide, 3-diphenoxyphosphinyloxy-4-fluorotetrahydrothiophene-1,1-dioxide, 3-bis-trifluoromethoxy-4-fluorophosphinyloxytetrahydrothiophene-1,1-dioxide, 3-bis-allyloxy-4-fluorophosphinyloxytetrahydrothiophene-1,1-dioxide, and 3-bis-cyclohexyloxyphosphinyloxy-4-fluorotetrahydrothiophene-1,1-dioxide.

In particular, from the viewpoint of suppressing initial resistance more, it is preferable to include at least one compound selected from the group consisting of 3-(difluorophosphinyloxy)tetrahydrothiophene-1,1-dioxide, 3-dimethylphosphinyloxytetrahydrothiophene-1,1-dioxide, 3-diphenylphosphinyloxytetrahydrothiophene-1,1-dioxide, 3-dimethoxyphosphinyloxytetrahydrothiophene-1,1-dioxide, 3-bis-allyloxyphosphinyloxytetrahydrothiophene-1,1-dioxide, 3-diphenoxyphosphinyloxytetrahydrothiophene-1,1-dioxide, 3-dimethoxyphosphinyloxy-4-fluorotetrahydrothiophene-1,1-dioxide, 3-bis-allyloxy-4-fluorophosphinyloxytetrahydrothiophene-1,1-dioxide, and 3-dipropargylphosphinyloxytetrahydrothiophene-1,1-dioxide.

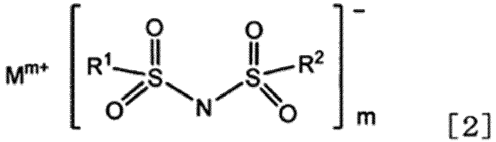

[In the general formula [2],
R¹ and R² each independently represent a fluorine atom or an organic group selected from a C1-10 linear or C3-10 branched alkyl group, a C1-10 linear or C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group, and a C6-10 aryloxy group, wherein the organic group may contain a fluorine atom, an oxygen atom or a unsaturated bond. However, at least one of R¹ and R² is a fluorine atom;
M^{m+} is an alkali metal cation, an alkaline earth metal cation, or an onium cation; and
m represents an integer that is the same number as the valence of the corresponding cation.]

In the present invention, the expression of "the organic group may contain a fluorine atom " means that at least one of the hydrogen atoms of the organic group is substituted with a fluorine atom.

The expression of "the organic group may contain an oxygen atom" means that an oxygen atom is included between at least one carbon-carbon bond of the organic group.

The expression of "the organic group may contain an unsaturated bond" means that at least one of the carbon-carbon bonds of the organic group is an unsaturated bond.

In the general formula [2], examples of the C1-10 linear or C3-10 branched alkyl group represented by R¹ or R² include a methyl group, an ethyl group, an n-propyl group, an isopropyl group, an n-butyl group, an isobutyl group, a tert-butyl group, a pentyl group, a trifluoromethyl group, a 2,2-difluoroethyl group, a 2,2,2-trifluoroethyl group, a 1,1,2,2,2-pentafluoroethyl group, a 2,2,3,3-tetrafluoropropyl group, and a 1,1,1,3,3,3-hexafluoroisopropyl group. In particular, preferred are a methyl group, a trifluoromethyl group, 2,2,2-trifluoroethyl group, and a 1,1,2,2,2-pentafluoroethyl group.

Examples of the C1-10 linear or C3-10 branched alkoxy group include a methoxy group, an ethoxy group, an n-propoxy group, an isopropoxy group, an n-butoxy group, an isobutoxy group, a tert-butoxy group, a pentyloxy group, a 2,2-difluoroethoxy group, a 2,2,2-trifluoroethoxy group, a 2,2,3,3-tetrafluoropropyloxy group, and a 1,1,1,3,3,3-hexafluoroisopropoxy group. In particular, preferred are a methoxy group, a 2,2-difluoroethoxy group, a 2,2,2-trifluoroethoxy group, a 2,2,3,3-tetrafluoropropyloxy group, and a 1,1,1,3,3,3-hexafluoroisopropoxy group.

Examples of the C2-10 alkenyl group include a vinyl group, an allyl group, a 1-propenyl group, an isopropenyl group, a 2-butenyl group, and a 1,3-butadienyl group. In particular, preferred is a vinyl group.

Examples of the C2-10 alkenyloxy group include a vinyloxy group, an allyloxy group, a 1-propenyloxy group, an isopropenyloxy group, a 2-butenyloxy group, and a 1,3-butadienyloxy group. In particular, preferred is an allyloxy group.

Examples of the C2-10 alkynyl group include an ethynyl group, a 2-propynyl group, and a 1,1-dimethyl-2-propynyl group.

Examples of the C2-10 alkynyloxy group include an ethynyloxy group, a 2-propynyloxy group, and a 1,1-dimethyl-2-propynyloxy group. In particular, preferred is a 2-propynyloxy group.

Examples of the C3-10 cycloalkyl group include a cyclopentyl group and a cyclohexyl group.

Examples of the C3-10 cycloalkoxy group include a cyclopentyloxy group and a cyclohexyloxy group.

Examples of the C3-10 cycloalkenyl group include a cyclopentenyl group and a cyclohexenyl group.

Examples of the C3-10 cycloalkenyloxy group include a cyclopentenyloxy group and a cyclohexenyloxy group.

Examples of the C6-10 aryl group include a phenyl group, a 2-fluorophenyl group, a pentafluorophenyl group, a tolyl group, and a xylyl group. In particular, preferred are a phenyl group, a 2-fluorophenyl group, and a pentafluorophenyl group.

Examples of the C6-10 aryloxy group include a phenyloxy group, a 2-fluorophenyloxy group, a pentafluorophenyloxy group, a tolyloxy group, and a xylyloxy group. In particular, preferred is a phenyloxy group.

More specific examples of the anion of the compound represented by the general formula [2] include the following compounds Nos. 2-1 to 2-17. However, the compounds represented by the general formula [2] to be used in the present invention are not limited at all to the following examples.

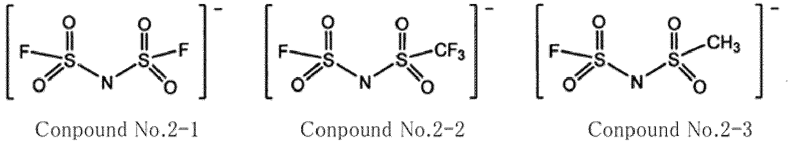

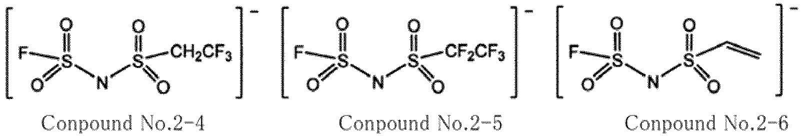

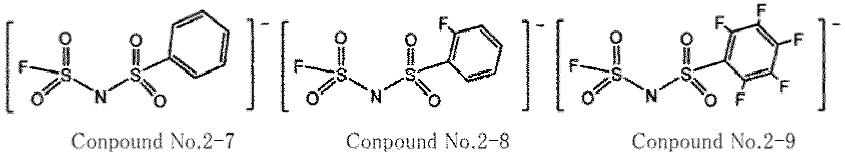

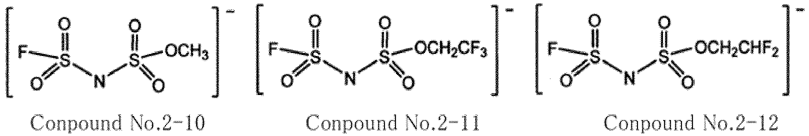

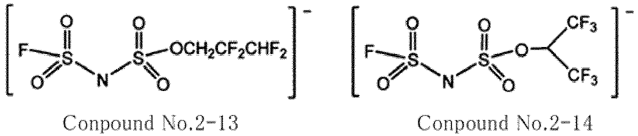

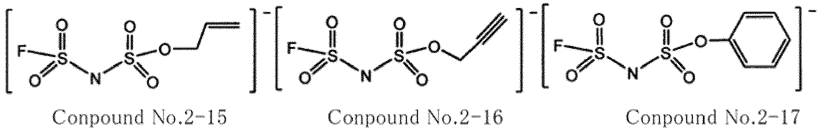

In the general formula [2], for example, when R¹ is a fluorine atom and R² is a group other than a fluorine atom, the group other than a fluorine atom is preferably a group selected from hydrocarbon groups having 6 or less caron atoms which may include a fluorine atom. It is preferable that the number of carbon atoms of the hydrocarbon group is less than 6, as the internal resistance when a film is formed on an electrode tends to be relatively low. In particular, preferred are a methyl group, an ethyl group, an n-propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group and alkoxy groups, alkenyloxy groups, and alkynyloxy groups derived from these groups, because a non-aqueous electrolyte solution secondary battery that can show cycle characteristics and internal resistance characteristics in a well-balanced state can be obtained.

As the anion of the compound represented by the general formula [2], among the compounds Nos. 2-1 to 2-17 above, the compounds No. 2-1, No. 2-2, No. 2-3, No. 2-6, No. 2-10, No. 2-11, No. 2-14, and No. 2-16 are more preferable from the viewpoint of suppressing an increase in the internal resistance, and the compounds No. 2-1, No. 2-2, No. 2-6, and No.2-10 are particularly preferable.

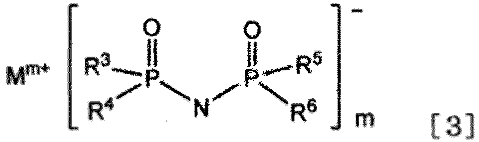

[In the general formula [3],
R³ to R⁶ each independently represent a fluorine atom, or an organic group selected from a C1-10 linear or C3-10 branched alkyl group, a C1-10 linear or C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group, and a C6-10 aryloxy group, wherein the organic group may contain a fluorine atom, an oxygen atom, a cyano group or an unsaturated bond. However, at least one of R³ to R⁶ is a fluorine atom; and
M^{m+} and m are the same as those explained in the general formula [2].]

In the present invention, the expression of "the organic group may contain a cyano group" means that at least one of the hydrogen atoms of the organic group is substituted with a cyano group.

In the general formula [3], examples of the C1-10 linear or C3-10 branched alkyl group represented by any of R³ to R⁶ include a methyl group, an ethyl group, an n-propyl group, an isopropyl group, an n-butyl group, an isobutyl group, a tert-butyl group, a pentyl group, a 2,2-difluoroethyl group, a 2,2,2-trifluoroethyl group, a 1,1,2,2,2-pentafluoroethyl group, a 2,2,3,3-tetrafluoropropyl group, and a 1,1,1,3,3,3-hexafluoroisopropyl group.

Examples of the C1-10 linear or C3-10 branched alkoxy group include a methoxy group, an ethoxy group, an n-propoxy group, an isopropoxy group, an n-butoxy group, an isobutoxy group, a tert-butoxy group, a pentyloxy group, a 2,2-difluoroethoxy group, a 2,2,2-trifluoroethoxy group, a 2,2,3,3-tetrafluoropropyloxy group, a 1,1,1,3,3,3-hexafluoroisopropoxy group, and a 2-cyanoethoxy group. In particular, preferred are a methoxy group, a 2,2-difluoroethoxy group, a 2,2,2-trifluoroethoxy group, a 1,1,1,3,3,3-hexafluoroisopropoxy group, and a 2-cyanoethoxy group.

Examples of the C2-10 alkenyl group include a vinyl group, an allyl group, a 1-propenyl group, an isopropenyl group, a 2-butenyl group, and a 1,3-butadienyl group.

Examples of the C2-10 alkenyloxy group include a vinyloxy group, an allyloxy group, a 1-propenyloxy group, an isopropenyloxy group, a 2-butenyloxy group, and a 1,3-butadienyloxy group. In particular, preferred is an allyloxy group.

Examples of the C2-10 alkynyl group include an ethynyl group, a 2-propynyl group, and a 1,1-dimethyl-2-propynyl group.

Examples of the C2-10 alkynyloxy group include an ethynyloxy group, a 2-propynyloxy group, and a 1,1-dimethyl-2-propynyloxy group. In particular, preferred is a 2-propynyloxy group.

Examples of the C3-10 cycloalkyl group include a cyclopentyl group and a cyclohexyl group.

Examples of the C3-10 cycloalkoxy group include a cyclopentyloxy group and a cyclohexyloxy group.

Examples of the C3-10 cycloalkenyl group include a cyclopentenyl group and a cyclohexenyl group.

Examples of the C3-10 cycloalkenyloxy group include a cyclopentenyloxy group and a cyclohexenyloxy group.

Examples of the C6-10 aryl group include a phenyl group, a 2-fluorophenyl group, a pentafluorophenyl group, a tolyl group, and a xylyl group.

Examples of the C6-10 aryloxy group include a phenyloxy group, a 2-fluorophenyloxy group, a pentafluorophenyloxy group, a tolyloxy group, and a xylyloxy group. In particular, preferred is a phenyloxy group.

More specific examples of the anion of the compound represented by the general formula [3] include the following compounds Nos. 3-1 to 3-13. However, the compounds represented by the general formula [3] to be used in the present invention are not limited at all to the following examples. In the formula, Me represents a methyl group.

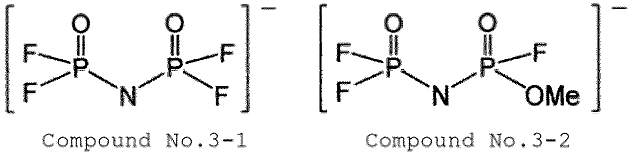

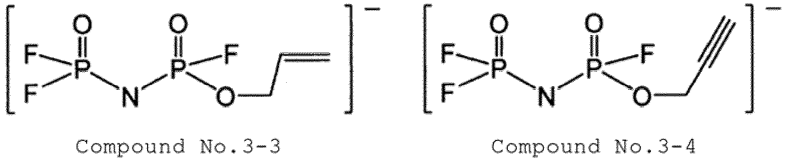

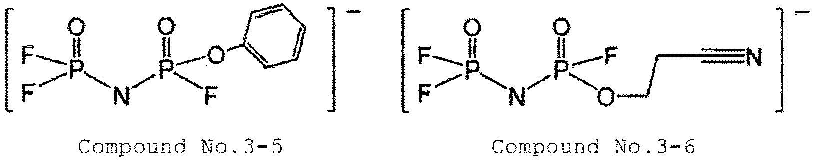

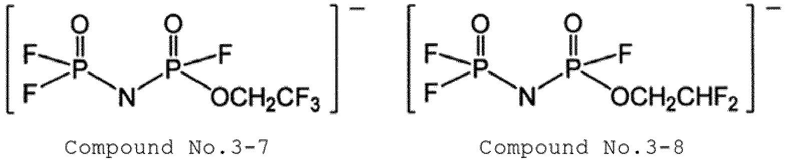

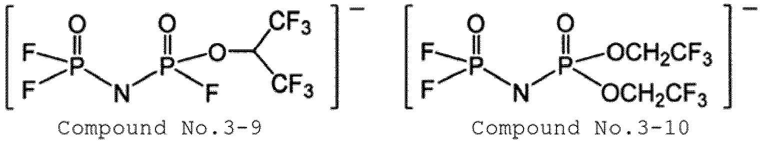

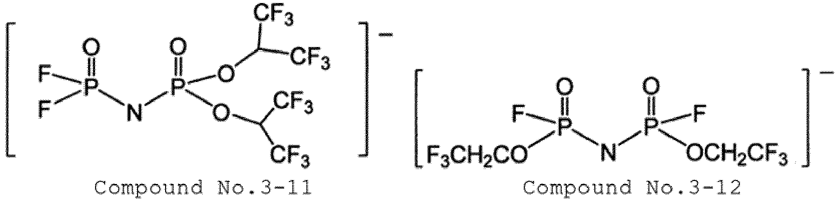

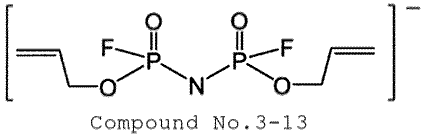

In the general formula [3], it is preferable that at least one of R³ to R⁶ is a fluorine atom and that at least one of R³ to R⁶ is a group selected from hydrocarbon groups having 6 or less caron atoms which may include a fluorine atom. It is preferable that the number of carbon atoms of the hydrocarbon group is less than 6, as the internal resistance when a film is formed on an electrode tends to be relatively low. In particular, at least one selected from a methyl group, an ethyl group, an n-propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group as well as alkoxy groups, alkenyloxy groups and alkynyloxy groups derived from these groups is preferable, as a non-aqueous electrolyte solution secondary battery that can show cycle characteristics and internal resistance characteristics in a well-balanced state can be obtained.

As the anion of the compound represented by the general formula [3], among the compounds Nos. 3-1 to 3-13, the compounds No. 3-1, No. 3-2, No. 3-3, No. 3-4, No. 3-6, No. 3-7, No. 3-9, and No. 3-13 are much preferable from the viewpoint of suppressing an increase in the internal resistance, and the compounds No. 3-1, No. 3-2, No. 3-4, and No. 3-9 are particularly preferable.

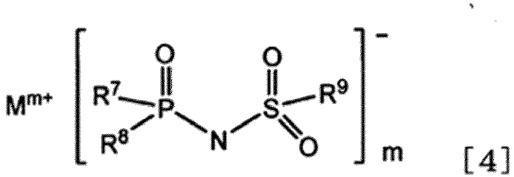

[In the general formula [4],
R⁷ to R⁹ are each independently a fluorine atom or an organic group selected from a C1-10 linear or C3-10 branched alkyl group, a C1-10 linear or C3-10 branched alkoxy group, a C2-10 alkenyl group, a C2-10 alkenyloxy group, a C2-10 alkynyl group, a C2-10 alkynyloxy group, a C3-10 cycloalkyl group, a C3-10 cycloalkoxy group, a C3-10 cycloalkenyl group, a C3-10 cycloalkenyloxy group, a C6-10 aryl group, and a C6-10 aryloxy group, wherein the organic group may also contain a fluorine atom, an oxygen atom or an unsaturated bond. However, at least one of R⁷ to R⁹ is a fluorine atom; and
M^{m+} and m are the same as those explained in the general formula [2].]

In the general formula [4], examples of the C1-10 linear or C3-10 branched alkyl group represented by any of R⁷ to R⁹ include a methyl group, an ethyl group, an n-propyl group, an isopropyl group, an n-butyl group, an isobutyl group, a tert-butyl group, a pentyl group, a trifluoromethyl group, a 2,2-difluoroethyl group, a 2,2,2-trifluoroethyl group, a 1,1,2,2,2-pentafluoroethyl group, a 2,2,3,3-tetrafluoropropyl group, and a 1,1,1,3,3,3-hexafluoroisopropyl group. In particular, preferred are a methyl group and a trifluoromethyl group.

Examples of the C1-10 linear or C3-10 branched alkoxy group include a methoxy group, an ethoxy group, an n-propoxy group, an isopropoxy group, an n-butoxy group, an isobutoxy group, a tert-butoxy group, a pentyloxy group, a 2,2-difluoroethoxy group, a 2,2,2-trifluoroethoxy group, a 2,2,3,3-tetrafluoropropyloxy group, and a 1,1,1,3,3,3-hexafluoroisopropoxy group. In particular, preferred are a methoxy group, an ethoxy group, a 2,2,2-trifluoroethoxy group, and a 1,1,1,3,3,3-hexafluoroisopropoxy group.

Examples of the C2-10 alkenyl group include a vinyl group, an allyl group, a 1-propenyl group, an isopropenyl group, a 2-butenyl group, and a 1,3-butadienyl group. In particular, preferred is a vinyl group.

Examples of the C2-10 alkenyloxy group include a vinyloxy group, an allyloxy group, a 1-propenyloxy group, an isopropenyloxy group, a 2-butenyloxy group, and a 1,3-butadienyloxy group. In particular, preferred is an allyloxy group.

Examples of the C2-10 alkynyl group include an ethynyl group, a 2-propynyl group, and a 1,1-dimethyl-2-propynyl group.

Examples of the C2-10 alkynyloxy group include an ethynyloxy group, a 2-propynyloxy group, and a 1,1-dimethyl-2-propynyloxy group. In particular, preferred is a 2-propynyloxy group.

Examples of the C3-10 cycloalkyl group include a cyclopentyl group and a cyclohexyl group.

Examples of the C3-10 cycloalkoxy group include a cyclopentyloxy group and a cyclohexyloxy group.

Examples of the C3-10 cycloalkenyl group include a cyclopentenyl group and a cyclohexenyl group.

Examples of the C3-10 cycloalkenyloxy group include a cyclopentenyloxy group and a cyclohexenyloxy group.

Examples of the C6-10 aryl group include a phenyl group, a 2-fluorophenyl group, a pentafluorophenyl group, a tolyl group, and a xylyl group.

Examples of the C6-10 aryloxy group include a phenyloxy group, a 2-fluorophenyloxy group, a pentafluorophenyloxy group, a tolyloxy group, and a xylyloxy group. In particular, preferred are a phenyloxy group and a tolyloxy group.

More specific examples of the anion of the compound represented by the general formula [4] include the following compounds Nos. 4-1 to 4-18. However, the compounds represented by the general formula [4] to be used in the present invention are not limited at all to the following examples. In the formula, Me represents a methyl group, and Et represents an ethyl group.

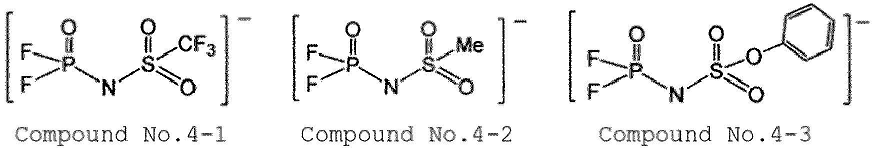

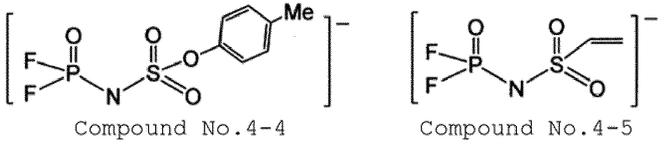

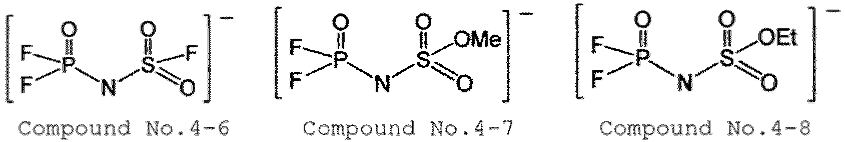

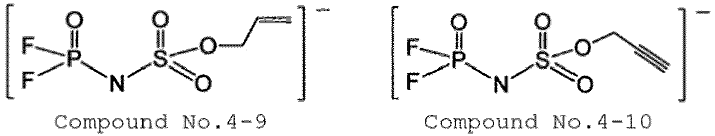

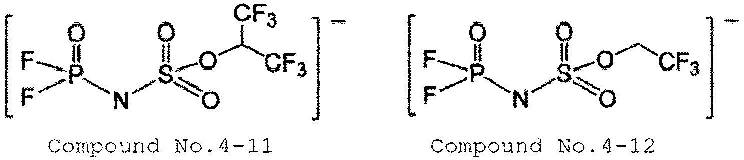

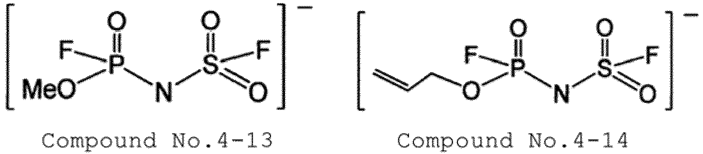

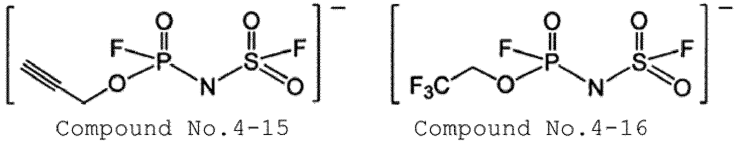

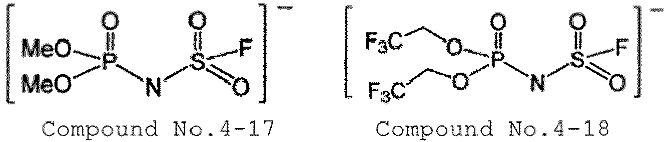

In the general formula [4], it is preferable that at least one of R⁷ to R⁹ is a fluorine atom and that at least one of R⁷ to R⁹ is a group selected from hydrocarbon groups having 6 or less caron atoms which may include a fluorine atom. It is preferable that the number of carbon atoms of the hydrocarbon group is less than 6, as the internal resistance when a film is formed on an electrode tends to be relatively low. In particular, at least one selected from a methyl group, an ethyl group, an n-propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group as well as alkoxy groups, alkenyloxy groups and alkynyloxy groups derived from these groups is preferable, as a non-aqueous electrolyte solution secondary battery that can show cycle characteristics and internal resistance characteristics in a well-balanced state can be obtained.

As the anion of the compound represented by the general formula [4], among the compounds Nos. 4-1 to 4-18, the compounds No. 4-1, No. 4-2, No. 4-3, No. 4-5, No. 4-6, No. 4-7, No. 4-10, No. 4-11, No. 4-15, No. 4-17, and No. 4-18 are much preferable from the viewpoint of suppressing an increase in the internal resistance, and the compounds No. 4-1, No. 4-2, No. 4-5, No. 4-6, No. 4-7, No. 4-15, and No. 4-18 are particularly preferable.

In addition, in the general formulae [2] to [4], M^{m+} is preferably selected from the group consisting of a lithium ion, a sodium ion, a potassium ion, and a tetraalkylammonium ion, much preferably a lithium ion or a sodium ion, and particularly preferably a lithium ion.

Si(R¹⁰)ₐ(R¹¹)₄-ₐ [5]

[In the general formula [5],
R¹⁰ s are each independently a group having a carbon-carbon unsaturated bond, and R¹¹s are each independently a fluorine atom, a C1-10 linear or C3-10 branched alkyl group which may be substituted with a fluorine atom, and a C1-10 linear or C3-10 branched alkoxy group which may be substituted with a fluorine atom; and
a is an integer of 2 to 4.]

In the general formula [5], examples of the group having a carbon-carbon unsaturated bond represented by R¹⁰ include C2-8 alkenyl groups such as a vinyl group, an allyl group, a 1-propenyl group, a 2-propenyl group, an isopropenyl group, a 2-butenyl group, and a 1,3-butadienyl group as well as alkenyloxy groups derived from these groups; C2-8 alkynyl groups such as an ethynyl group, a 2-propynyl group, and a 1,1-dimethyl-2-propynyl group as well as alkynyloxy groups derived from these groups; and C6-12 aryl groups such as a phenyl group, a tolyl group, and a xylyl group as well as aryloxy groups derived from these groups. In addition, the above groups may include a fluorine atom and an oxygen atom. Including a fluorine atom means that a hydrogen atom bound to a carbon atom is substituted with a fluorine atom, and including an oxygen atom means that an oxygen atom is present between a carbon-carbon bond as an ether bond.

Among them, a group having 6 or less carbon atoms and containing a carbon-carbon unsaturated bond is preferable. It is preferable that the number of carbon atoms is less than 6, as the internal resistance when a film is formed on an electrode tends to be relatively low. Specifically, a group selected from the group consisting of a vinyl group, an allyl group, a 1-propenyl group, a 2-propenyl group, an ethynyl group, and a 2-propynyl group is preferable, and a vinyl group is particularly preferable.

In the general formula [5], examples of the alkyl group represented by R¹¹ include C1-10 alkyl groups such as a methyl group, an ethyl group, an n-propyl group, an isopropyl group, an n-butyl group, a sec-butyl group, an isobutyl group, a tert-butyl group, and a pentyl group. The groups above may include a fluorine atom and an oxygen atom. Examples of the group including an oxygen atom include alkoxy groups derived from the above-mentioned alkyl groups. When the group is selected from the alkyl groups and the alkoxy groups, the resistance when a film is formed on an electrode tends to be lower, and as a result, such groups are preferable from the viewpoint of output characteristics. In particular, it is preferable that the group is selected from the group consisting of a methyl group, an ethyl group, an n-propyl group, a 2,2,2-trifluoroethyl group, a 2,2,3,3-tetrafluoropropyl group, a 1,1,1-trifluoroisopropyl group, a 1,1,1,3,3,3-hexafluoroisopropyl group, a 2,2,2-trifluoroethoxy group, a 2,2,3,3-tetrafluoropropoxy group, a 2,2,3,3,3-pentafluoropropoxy group, a 1,1,1-trifluoroisopropoxy group, and a 1,1,1,3,3,3-hexafluoroisopropoxy group, as a non-aqueous electrolyte solution battery having more excellent high-temperature cycle characteristics and high-temperature storage characteristics can be obtained without increasing the internal resistance when a coating film is formed on an electrode.

The number of the group having a carbon-carbon unsaturated bond represented by a in the general formula [5] is preferably an integer of 2 to 4 in order to form a film on an electrode, preferably 3 or 4 because the high-temperature cycle characteristics and the high-temperature storage characteristics are more easily improved, and particularly preferably 4. Although the details are unknown, it is thought that this is because a stronger film is easily formed.

More specific examples of the compound represented by the general formula [5] include the following compounds Nos. 5-1 to 5-20. However, the silane compounds to be used in the present invention are not limited at all to the following examples.

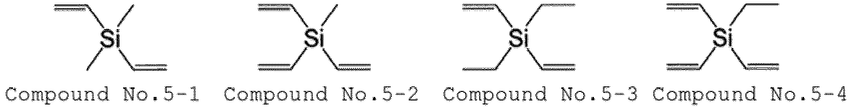

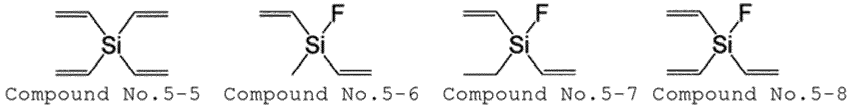

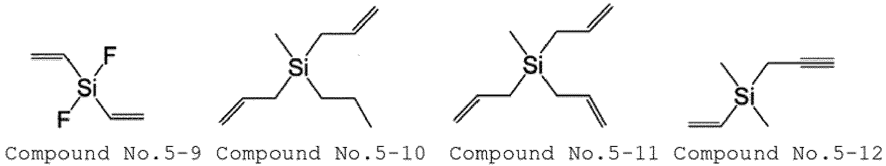

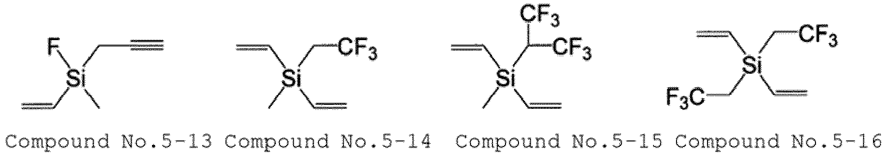

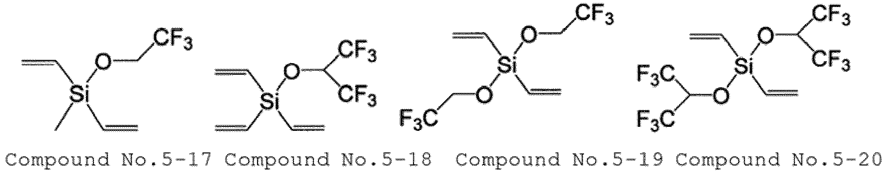

As the compounds represented by the general formula [5], among the above compounds Nos. 5-1 to 5-20, the compounds No. 5-1, No. 5-2, No. 5-3, No. 5-4, No. 5-5, No. 5-6, No. 5-8, No. 5-9, No. 5-12, No. 5-17, No. 5-18, and No. 5-20 are much preferable from the viewpoint of improving the durability at high temperature, and compounds No. 5-2, No. 5-4, No. 5-5, No. 5-8, and No. 5-18 are particularly preferable.

The non-aqueous electrolyte solution of the present disclosure preferably contains at least one additive selected from the group consisting of difluoro(oxalato)borate, bis(oxalato)borate, tetrafluoro(oxalato)phosphate, difluorobis(oxalato)phosphate, tris(oxalato)phosphate, difluorophosphate, fluorosulfonate, a bis(fluorosulfonyl)imide salt, vinylene carbonate, an oligomer of vinylene carbonate (number average molecular weight in terms of polystyrene: 170 to 5000), vinyl ethylene carbonate, fluoroethylene carbonate, 1,6-diisocyanatohexane, ethynyl ethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylene methane disulfonate, 1,2-ethanedisulfonic acid anhydride, methanesulfonyl fluoride, tris(trimethylsilyl)borate, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, and cyclohexylbenzene.

When the non-aqueous electrolyte solution according to the present embodiment includes the above additional additive, the content thereof is preferably 0.01 mass% or more and 5.00 mass% or less with respect to the total amount of the electrolyte solution.

The above-described non-aqueous electrolyte solution of the present disclosure is suitably used in a non-aqueous electrolyte solution secondary battery and, in particular, is preferably used in a non-aqueous electrolyte solution secondary battery including a current collector containing copper.

While the non-aqueous electrolyte solution of the present disclosure can suppress an increase in the initial resistance when used in a non-aqueous electrolyte solution secondary battery, it further can also exhibit an effect of reducing the elution of the copper component as the metal of the current collector into the electrolyte solution when used in a non-aqueous electrolyte solution secondary battery including a current collector containing copper.

### 2. Non-aqueous electrolyte solution secondary battery:

Then, the construction of the non-aqueous electrolyte solution secondary battery of the present disclosure will be described. The non-aqueous electrolyte solution secondary battery of the present disclosure is characterized by using the non-aqueous electrolyte solution of the present disclosure, and as other component members, those used in general non-aqueous electrolyte solution secondary batteries are used.

The non-aqueous electrolyte solution secondary battery may be a non-aqueous electrolyte solution secondary battery that includes (i) the above-described non-aqueous electrolyte solution, (ii) a positive electrode, (iii) a negative electrode, and (iv) a separator which will be described below.

### [Positive electrode (ii)]

The positive electrode (ii) preferably includes at least one oxide and/or a polyanion compound as the positive electrode active material.

### [Positive electrode active material]

In a lithium ion secondary battery in which the cations in the non-aqueous electrolyte solution are mainly lithium, the positive electrode active material constituting the positive electrode (ii) is not particularly limited as long as it is any of various materials that can charge and discharge, and is, for example, a material containing at least one selected from (A) a lithium-transition metal composite oxide containing at least one metal of nickel, manganese, and cobalt and having a layered structure; (B) a lithium-manganese composite oxide having a spinel structure; (C) a lithium-containing olivine-type phosphate; and (D) a lithium-rich layered transition metal oxide having a layered rock salt-type structure.

### (A) Lithium-transition metal composite oxide:

### Positive electrode active material:

Examples of the lithium-transition metal composite oxide (A) containing at least one metal of nickel, manganese, and cobalt and having a layered structure include a lithium-cobalt composite oxide, a lithium-nickel composite oxide, a lithium-nickel-cobalt composite oxide, a lithium-nickel-cobalt-aluminum composite oxide, a lithium-cobalt-manganese composite oxide, a lithium-nickel-manganese composite oxide, and a lithium-nickel-manganese-cobalt composite oxide. Those obtained by substituting a part of the transition metal atoms that are a main component of these lithium-transition metal composite oxides with other elements, such as Al, Ti, V, Cr, Fe, Cu, Zn, Mg, Ga, Zr, Si, B, Ba, Y, and Sn, may be used.

As specific examples of the lithium-cobalt composite oxide and the lithium-nickel composite oxide, for example, LiCoO₂, LiNiO₂, a lithium cobaltate to which a different element such as Mg, Zr, Al and Ti is added (e.g., LiCo_{0.98}Mg_{0.01}Zr_{0.01}O₂, LiCo_{0.98}Mg_{0.01}Al_{0.01}O₂, and LiCo_{0.975}Mg_{0.01}Zr_{0.005}Al_{0.01}O₂), and a lithium cobalt oxide fixed with a rare earth compound on the surface described in WO2014/034043 may be used. In addition, as described in JP-A- 2002-151077 and so on, a LiCoO₂ particle powder having a particle surface partially coated with aluminum oxide may be used.

The lithium-nickel-cobalt composite oxide and the lithium-nickel-cobalt-aluminum composite oxide are represented by the general formula (6):

LiₐNi_{1-b-c}CO_{b}M¹_{c}O₂ (6).

In the formula (6), M¹ is at least one element selected from the group consisting of Al, Fe, Mg, Zr, Ti and B; a is 0.9 ≤ a ≤ 1.2; and b and c satisfy the requirements of 0.01 ≤ b ≤ 0.3 and 0 ≤ c ≤ 0.1.

These composite oxides can be prepared in accordance with, for example, the manufacturing method described in JP-A-2009-137834. Specific examples thereof include LiNi_{0.8}Co_{0.2}O₂, LiNi_{0.85}Co_{0.10}Al_{0.05}O₂, LiNi_{0.87}Co_{0.10}Al_{0.03}O₂, LiNi_{0.90}Co_{0.07}Al_{0.03}O₂, and LiNi_{0.6}Co_{0.3}Al_{0.1}O₂.

Specific examples of the lithium-cobalt-manganese composite oxide and the lithium-nickel-manganese composite oxide include LiNi_{0.5}Mn_{0.5}O₂ and LiCo_{0.5}Mn_{0.5}O₂.

Examples of the lithium-nickel-manganese-cobalt composite oxide include lithium-containing composite oxides represented by the general formula (7):

Li_{d}NiₑMn_{f}Co_{g}M²ₕO₂ (7) .

In the formula (7), M² is at least one element selected from the group consisting of Al, Fe, Mg, Zr, Ti, B, and Sn; d is 0.9 ≤ d ≤ 1.2; and e, f, g, and h satisfy the requirements of e + f + g + h = 1, 0 ≤ e ≤ 0.9, 0 ≤ f ≤ 0.5, 0 ≤ g ≤ 0.5, and h ≥ 0.

The lithium-nickel-manganese-cobalt composite oxide preferably contain manganese within a range shown in the general formula (7) in order to enhance the structural stability and to improve the stability of a lithium secondary battery at high temperature and more preferably further contain cobalt within a range shown in the general formula (7) particularly in order to enhance the high-efficiency characteristics of a lithium ion secondary battery.

Specifically, examples thereof include Li[Ni_{1/3}Mn_{1/3}Co_{1/3}]O₂, Li[Ni_{0.45}Mn_{0.35}Co_{0.2}]O₂, Li[Ni_{0.5}Mn_{0.3}Co_{0.2}]O₂, Li[Ni_{0.6}Mn_{0.2}Co_{0.2}]O₂ , Li[Ni_{0.8}Mn_{0.1}Co_{0.1}]O₂, Li [Ni_{0.49}Mn_{0.3}Co_{0.2}Zr_{0.01}]O₂, and Li[Ni_{0.49}Mn_{0.3}Co_{0.2}Mg_{0.01}]O₂, Li[Ni_{0.8}Mn₀.₁Co_{0.1}]O₂, which have a charge-discharge region of 4.3 V or more.

### (B) Lithium-manganese composite oxide having spinel structure:

### Positive electrode active material:

Examples of the lithium-manganese composite oxide (B) having a spinel structure include spinel-type lithium-manganese composite oxides represented by the general formula (8):

Liⱼ(Mn_{2 - k}M³ₖ)O₄ (8) .

In the formula (8), M³ is at least one metal element selected from the group consisting of Ni, Co, Fe, Mg, Cr, Cu, Al, and Ti; j is 1.05 ≤ j ≤ 1.15; and k is 0 ≤ k ≤ 0.20.

Specifically, examples of thereof include LiMn₂O₄, LiMn_{1.95}Al_{0.05}O₄, LiMn_{1.9}Al_{0.1}O₄, LiMn_{1.9}Ni_{0.1}O₄, and LiMn_{1.5}Ni_{0.5}O₄.

### (C) Lithium-containing olivine-type phosphate:

### Positive electrode active material:

Examples of the lithium-containing olivine-type phosphate (C) include compounds represented by a general formula (9):

LiFe₁₋ₙM⁴ₙPO₄ (9) .

In the formula (9), M⁴ is at least one selected from Co, Ni, Mn, Cu, Zn, Nb, Mg, Al, Ti, W, Zr, and Cd; and n is 0 ≤ n ≤ 1.

Specifically, examples of thereof include LiFePO₄, LiCoPO₄, LiNiPO₄, and LiMnPO₄, and LiFePO₄ and/or LiMnPO₄ are particularly preferable.

### (D) Lithium-rich layered transition metal oxide:

### Positive electrode active material:

Examples of the lithium-rich layered transition metal oxide (D) having a layered rock salt-type structure include compounds represented by the general formula (10):

xLiM⁵O₂ • (1-x)Li₂M⁶O₃ (10).

In the formula (10), x is a number satisfying 0 < x < 1; M⁵ is at least one metal element having an average oxidation number of 3⁺; and M⁶ is at least one metal element having an average oxidation number of 4⁺. In the formula (10), while M⁵ is preferably one metal element selected from trivalent Mn, Ni, Co, Fe, V, and Cr, the average oxidation number may be trivalent with an equal amount of divalent and tetravalent metals.

In addition, in the formula (10), M⁶ is preferably one or more metal elements selected from Mn, Zr, and Ti. Specifically, examples thereof include 0.5[LiNi_{0.5}Mn_{0.5}O₂] • 0.5 [Li₂MnO₃], 0.5[LiNi_{1/3}Co_{1/3}Mn_{1/3}O₂] • 0.5[Li₂MnO₃], 0.5[LiNi_{0.375}Co_{0.25}Mn_{0.375}O₂] . 0.5[Li₂MnO₃], 0.5 [LiNi_{0.375}Co_{0.125}Fe_{0.125}Mn_{0.375}O₂] • 0.5[Li₂MnO₃], and 0.45 [LiNi_{0.375}Co_{0.25}Mn_{0.375}O₂] • 0.10 [Li₂TiO₃] -0.45 [Li₂MnO₃].

The positive electrode active material (D) represented by the general formula (10) is known to express high capacity by charging with a high voltage of 4.4 V (versus Li) or more (see, for example, U.S. Patent No. 7,135,252).

These positive electrode active materials can be prepared in accordance with, for example, the manufacturing methods described in JP-A-2008-270201, WO2013/118661, JP-A-2013-030284, and so on.

it is sufficient that the positive electrode active material contains at least one selected from the above (A) to (D) as a main component, and examples of the component other than the above include transition element chalcogenides, such as FeS₂, TiS₂, V₂O₅, MoO₃, and MoS₂; conductive polymers, such as polyacetylene, polyparaphenylene, polyaniline, and polypyrrole; activated carbon; polymers that generate radicals; and carbon materials.

### [Positive electrode current collector]

The positive electrode (ii) includes a positive electrode current collector. As the positive electrode current collector, for example, aluminum, stainless steel, nickel, titanium, or an alloy thereof can be used.

### [Positive electrode active material layer]

In the positive electrode (ii), for example, a positive electrode active material layer is formed on at least one surface of the positive electrode current collector. The positive electrode active material layer is constituted of, for example, the positive electrode active material described above, a binder, and, as needed, a conducting agent.

Examples of the binder include polytetrafluoroethylene, polyvinylidene fluoride, and styrene butadiene rubber (SBR) resin.

As the conducting agent, for example, carbon materials such as acetylene black, Ketjen black, carbon fibers, or graphite (granular graphite or flake-like graphite) can be used. In the positive electrode, it is preferable to use acetylene black or Ketjen black, which are low in crystallinity.

### [Negative electrode (iii)]

The negative electrode (iii) preferably includes at least one negative electrode active material.

### [Negative electrode active material]

In a lithium ion secondary battery in which the cations in the non-aqueous electrolyte solution are mainly lithium, the negative electrode active material constituting the negative electrode (iii) can dope and dedope lithium ions and, for example, includes at least one selected from (E) a carbon material in which the d value of the lattice plane (002 plane) in X-ray diffraction is 0.340 nm or less; (F) a carbon material in which the d value of the lattice plane (002 plane) in X-ray diffraction is higher than 0.340 nm; (G) an oxide of one or more metals selected from Si, Sn, and Al; (H) a material that is one or more metals selected from Si, Sn, and Al, an alloy containing the metal, or an alloy of the metal or alloy with lithium; and (I) a lithium titanium oxide. These negative electrode active materials can be used alone or in combination of two or more thereof. In addition, a lithium metal, a metal nitride, a tin compound, a conductive polymer, or the like may be used.

### (E) Carbon material in which d value of lattice plane (002 plane) in X-ray diffraction is 0.340 nm or less:

### Negative electrode active material:

Examples of (E) the carbon material in which the d value of the lattice plane (002 plane) in X-ray diffraction is 0.340 nm or less include pyrolytic carbon, cokes (e.g., pitch coke, needle coke, and petroleum coke), graphite, fired products of organic polymer compounds (e.g., products obtained by firing a phenol resin, a furan resin, or the like and carbonizing them at appropriate temperature), carbon fibers, and activated carbon, and they may be graphitized. The carbon material has a (002) plane distance (d002) of 0.340 nm or less as measured by an X-ray diffraction method. In particular, graphite having a true density of 1.70 g/cm³ or more or highly crystalline carbon material having similar properties thereto are preferable.

### (F) Carbon material in which d value of lattice plane (002 plane) in X-ray diffraction is higher than 0.340 nm:

### Negative electrode active material:

Examples of (F) the carbon material in which the d value of the lattice plane (002 plane) in X-ray diffraction is higher than 0.340 nm include amorphous carbon characterized by a stacking order that remains almost unchanged even when heat-treated at a high temperature of 2000°C or more. For example, non-graphitizable carbon (hard carbon), mesocarbon microbeads (MCMB) fired at 1500°C or less, and mesophase-pitch carbon fibers (MCF) are exemplified. Carbotron (registered trademark) P manufactured by KUREHA Corporation is a typical example thereof.

### (G) Oxide of one or more metals selected from Si, Sn, and Al:

### Negative electrode active material:

Examples of the oxide (G) of one or more metals selected from Si, Sn, and Al include silicon oxide and tin oxide that can dope and dedope lithium ions.

For example, SiOₓ has a structure in which ultrafine particles of Si are dispersed in SiO₂. When such a material is used as the negative electrode active material, since Si that reacts with Li is an ultrafine particle, charge and discharge are smoothly performed, and at the same time, since the SiOₓ particle with the above structure itself has a small surface area, coating properties and adhesive properties to the current collector of a negative electrode mixture layer are also good when used as a composition (paste) for forming a negative electrode active material layer.

SiOₓ has a large volume change due to charging and discharging. Accordingly, both an increase in the capacity and good charge and discharge cycle characteristics can be achieved by using both SiOₓ and graphite of the above negative electrode active material (E) at a specific ratio as the negative electrode active material.

### (H) Material that is one or more metals selected from Si, Sn, and Al, alloy containing the metal, or alloy of the metal or alloy and lithium:

### Negative electrode active material:

Examples of the material (H) that is one or more metals selected from Si, Sn, and Al, an alloy containing the metal, or an alloy of the metal or alloy with lithium include metals, such as silicon, tin, and aluminum, silicon alloys, tin alloys, and aluminum alloys, and materials obtained by alloying these metals and alloys with lithium due to charging and discharging can also be used.

Preferable specific examples of these materials include single metals (e.g., in a powder form), such as silicon (Si) and tin (Sn); alloys of the metals, compounds containing the metals, and alloys containing tin (Sn) and cobalt (Co) in addition to the metals, as described in WO2004/100293, JP-A-2008-016424, or the like. It is preferable that such a metal is used in an electrode, because a high charging capacity can be exhibited and the volume expansion and contraction due to charging and discharging is relatively small. In addition, these metals are known to be alloyed with Li during charging when used in the negative electrode of a lithium ion secondary battery, to thereby express high charging capacity, and are also preferable from this point.

Further, a negative electrode active material formed from a silicon pillar having a submicron diameter and a negative electrode active material made of fibers constituted of silicon, which are described in WO2004/042851, WO2007/083155 and so on, can also be used.

### (I) Lithium titanium oxide:

### Negative electrode active material:

Examples of (I) the lithium titanium oxide include lithium titanate having a spinel structure and lithium titanate having a ramsdellite structure.

Examples of the lithium titanate having a spinel structure include Li_{4+α}Ti₅O₁₂ (α changes within a range of 0 ≤ α ≤ 3 by the charge and discharge reaction). Examples of the lithium titanate having a ramsdellite structure include Li_{2+β}Ti₃O₇ (β changes within a range of 0 ≤ β ≤ 3 by the charge and discharge reaction). These negative electrode active materials can be prepared in accordance with, for example, the manufacturing methods described in JP-A-2007-018883, JP-A-2009-176752, and so on.

In contrast, in a sodium ion secondary battery in which the cations in the non-aqueous electrolyte solution are mainly sodium, as the negative electrode active material, for example, hard carbon or an oxide, such as TiO₂, V₂O₅, and MoO₃, is used. For example, in a sodium ion secondary battery in which the cations in the non-aqueous electrolyte solution are mainly sodium, as the positive electrode active material, a sodium-containing transition metal composite oxide such as NaFeO₂, NaCrO₂, NaNiO₂, NaMnO₂, and NaCoO₂; a composite oxide in which a plurality of transition metals such as Fe, Cr, Ni, Ti, Mn, and Co of these sodium-containing transition metal composite oxides are mixed (e.g., NaNi_{0.5}Ti_{0.3}Mn_{0.2}O₂); a composite oxide in which a part of the transition metals of these sodium-containing transition metal composite oxides is substituted with a metal other than a transition metal; a phosphate compound of a transition metal, such as Na₂FeP₂O₇ and NaCo₃ (PO₄ )₂P₂O₇; a sulfide, such as TiS₂ and FeS₂; a conductive polymer, such as polyacetylene, polyparaphenylene, polyaniline, and polypyrrole; activated carbon; a polymer that generates a radical; or a carbon material is used.

### [Negative electrode current collector]

The negative electrode (iii) includes a negative electrode current collector. As the negative electrode current collector, for example, copper, aluminum, stainless steel, nickel, titanium, or an alloy thereof can be used.

The non-aqueous electrolyte solution secondary battery of the present disclosure preferably includes copper as the negative electrode current collector. When the non-aqueous electrolyte solution of the present disclosure is used in a non-aqueous electrolyte solution secondary battery including copper as the negative electrode current collector, in addition to the effect of suppressing an increase in the initial resistance, an effect of suppressing elution of copper into the electrolyte solution is obtained.

### [Negative electrode active material layer]

In the negative electrode (iii), for example, a negative electrode active material layer is formed on at least one surface of the negative electrode current collector. The negative electrode active material layer is constituted of, for example, the negative electrode active material described above, a binder, and, as needed, a conducting agent.

Examples of the binder include polytetrafluoroethylene, polyvinylidene fluoride, and styrene butadiene rubber (SBR) resin.

As the conducting agent, for example, carbon materials such as acetylene black, Ketjen black, carbon fibers, and graphite (granular graphite or flake-like graphite) can be used.

### [Method for manufacturing electrodes (positive electrode (ii) and negative electrode (iii))]

An electrode can be obtained by, for example, dispersing and kneading an active material, a binder, and, as needed, a conducting agent at a predetermined mixing ratio in a solvent such as N-methyl-2-pyrrolidone (NMP) or water, applying the resultant paste to a current collector, and drying it to form an active material layer. The resultant electrode is preferably compressed by a method such as roll pressing to an electrode with an appropriate density.

### [Separator (iv)]

The above non-aqueous electrolyte solution secondary battery includes a separator (iv). As the separator for preventing the contact between the positive electrode (ii) and the negative electrode (iii), a non-woven fabric or porous sheet made of a polyolefin such as polypropylene or polyethylene, cellulose, paper, or glass fibers is used. These films are preferably microporous such that the electrolyte solution infiltrates them to allow ions to easily permeate therethrough.

The polyolefin separator include membranes that can electrically insulate between the positive electrode and the negative electrode and allow lithium ions to permeate therethrough, e.g., microporous polymer films such as a porous polyolefin film. As a specific example of the porous polyolefin film, for example, a porous polyethylene film alone or a multi-layer film in which a porous polyethylene film and a porous polypropylene film are stacked may be used. In addition, the examples include a composite film of a porous polyethylene film and a polypropylene film.

### [Outer packaging]

In configuration of a non-aqueous electrolyte solution secondary battery, as the outer packaging of the non-aqueous electrolyte solution secondary battery, for example, a metal can of a coin-type, a cylindrical, a square-type, or the like or a laminated outer packaging can be used. Examples of the material of the metal can include a nickel-plated steel plate, a stainless steel plate, a nickel-plated stainless steel plate, aluminum or an alloy thereof, nickel, and titanium.

As the laminated outer packaging, for example, an aluminum laminate film, a SUS laminate film, or a laminate film of, for example, silica-coated polypropylene or polyethylene can be used.

The construction of the non-aqueous electrolyte solution secondary battery according to the present embodiment is not particularly limited, and, for example, the battery can be constructed such that an electrode element composed of a positive electrode and a negative electrode disposed opposite to each other and a non-aqueous electrolyte solution are disposed in an outer packaging. The shape of the non-aqueous electrolyte solution secondary battery is not particularly limited, and an electrochemical device having a coin, cylinder, square, or aluminum laminate sheet-like shape is assembled from the above-mentioned elements.

### EXAMPLES

The present disclosure will now be further described more specifically by way of examples, but the scope of the present disclosure is not limited at all to the examples.

### <Preparation of electrolyte solution Nos. 1-1 to 1-8 and comparative electrolyte solution Nos. 1-1 to 1-3>

As a non-aqueous solvent, a solvent mixture obtained by mixing ethylene carbonate (hereinafter, "EC"), propylene carbonate (hereinafter, "PC"), dimethyl carbonate (hereinafter, "DMC"), and ethyl methyl carbonate (hereinafter, "EMC") at a volume ratio of EC : PC : DMC : EMC = 2 : 1 : 3 : 4 was used. Lithium hexafluorophosphate (hereinafter, "LiPF₆") was dissolved as a solute in the solvent at a concentration of 1.00 mol/L, and further LiN(SO₂F)(COCN) was dissolved as the (I) at a concentration of 0.02 mass%, to prepare an electrolyte solution No. 1-1. The preparation above was performed, while maintaining the solution temperature at 25°C. The conditions for preparing the electrolyte solution No. 1-1 are shown in Table 1.

Electrolyte solutions Nos. 1-2 to 1-8 and comparative electrolyte solution Nos. 1-1 to 1-3 were prepared by the same procedure as in the preparation of the electrolyte solution No. 1-1, except that the type and concentration of the (I) were changed to those shown in Table 1 below. In the preparation of the comparative electrolyte solution Nos. 1-2 and 1-3, succinonitrile (hereinafter, "SN") was used instead of the (I).

**[Table 1]**

| | (I) | | (II) | | (III) |
|---|---|---|---|---|---|
| | Type | mass% | Type | mol/L | |
| Electrolyte solution 1-1 | LiN(SO₂F)(COCN) | 0.02 | LiPF₆ | 1.00 | EC:PC:DMC:EMC= 2:1:3:4 (volume ratio) |
| Electrolyte solution 1-2 | | 0.20 | | | |
| Electrolyte solution 1-3 | | 0.50 | | | |
| Electrolyte solution 1-4 | | 1.00 | | | |
| Electrolyte solution 1-5 | | 2.00 | | | |
| Electrolyte solution 1-6 | LiN(SO₂F)(CO(OCN)) | 0.50 | | | |
| Electrolyte solution 1-7 | NaN(SO₂F)(COCN) | 0.20 | | | |
| Electrolyte solution 1-8 | NaN(SO₂F)(CO(OCN)) | 0.20 | | | |
| Comparative Electrolyte solution 1-1 | None | | | | |
| Comparative Electrolyte solution 1-2 | SN | 0.50 | | | |
| Comparative Electrolyte solution 1-3 | SN | 0.20 | | | |

### <Production of NCM811 positive electrode>

LiNi_{0.8}Co_{0.1}Mn_{0.1}O₂ powder (91.0 mass%) was mixed with polyvinylidene fluoride (hereinafter, "PVDF") (4.5 mass%) as a binder and acetylene black (4.5 mass%) as a conductive material, and N-methyl-2-pyrrolidone (hereinafter, "NMP") was further added thereto in an amount of 45 mass% based on the total mass of the LiNi_{0.8}Co_{0.1}Mn_{0.1}O₂ powder, the binder, and the conductive material, to prepare a positive electrode mixture paste. This paste was applied to both of the surfaces of aluminum foil (A1085), followed by drying, compressing, and then punching into a size of 4 cm × 5 cm to obtain an NCM811 positive electrode for testing.

### <Production of graphite negative electrode >

Artificial graphite powder (98.0 mass%) was mixed with carboxymethyl cellulose (hereinafter, "CMC") (1.0 mass%) and a styrene butadiene copolymer (hereinafter, "SBR") (1.0 mass%) as binders, and pure water was further added thereto in an amount of 50 mass% based on the total mass of the artificial graphite and the binders to produce a negative electrode mixture paste. This paste was applied to one surface of copper foil, followed by drying, compressing, and then punching into a size of 4.5 cm × 5.5 cm to obtain a graphite negative electrode for testing.

### [Examples 1-1 to 1-8 and Comparative Examples 1-1 to 1-3]

### <Production of non-aqueous electrolyte solution secondary battery>

Aluminum laminate outer packaged cells (capacity: 70 mAh) each including the above NCM811 positive electrode for testing, the graphite negative electrode for testing, and a cellulose separator were impregnated with the electrolyte solutions Nos. 1-1 to 1-8 and the comparative electrolyte solutions Nos. 1-1 to 1-3 shown in Table 1 above, respectively, to prepare non-aqueous electrolyte solution secondary batteries of Examples 1-1 to 1-8 and Comparative Examples 1-1 to 1-3.

### [Evaluation]

The non-aqueous electrolyte solution secondary batteries of Examples 1-1 to 1-8 and Comparative Examples 1-1 to 1-3 were each evaluated as follows.

### <Low-temperature output characteristics (evaluation of initial resistance)>

The cells impregnated with the electrolyte solutions, respectively, as described above were left to stand at an environmental temperature of 25°C for 12 hours (impregnation time: 12 hours) and were then subjected conditioning at an environmental temperature of 25°C under the following conditions. That is, as initial charge and discharge, constant current constant voltage charging at a charge upper limit voltage of 4.3 V and a 0.1 C rate (7 mA) and discharging at a 0.2 C rate constant current until a discharge termination voltage of 3.0 V were performed, and then, a charge and discharge cycle performing constant current constant voltage charging at a charge upper limit voltage of 4.3 V and a 0.2 C rate and discharging at a 0.2 C rate constant current until a discharge termination voltage of 3.0 V was repeated three times.

After the conditioning above, the discharge capacity (-30°C discharge capacity) was measured when constant current constant voltage charging at a 0.2 C rate by a constant current constant voltage method at an environment temperature of 25°C until a charge upper limit voltage of 4.3 V and discharging at a 5 C rate constant current at an environment temperature of -30°C until a discharge termination voltage of 3.0 V were performed. Table 2 below shows relative values of the capacities in Examples and Comparative Examples when the capacity in Comparative Example 1-1 is defined as 100. A larger relative value of the capacity means a smaller initial resistance.

In addition to the initial resistance evaluation, initial discharge capacity and over-discharge characteristics were also evaluated as indicators of the effect of suppressing elution of copper as the negative electrode current collector into the electrolyte solution.

### <Comparison of initial discharge capacity>

The cells impregnated with the electrolyte solutions, respectively, as described above were left to stand at an environmental temperature of 25°C for 3 days (impregnation time: 3 days) and were then subjected to constant current constant voltage charging at a charge upper limit voltage of 4.3 V and a 0.1 C rate (7 mA) at an environment temperature of 25°C and discharging at a 0.2 C rate constant current until a discharge termination voltage of 3.0 V as initial charge and discharge, and the initial discharge capacities were compared. Table 2 shows relative values of the initial discharge capacities in Examples and Comparative Examples when the capacity in Comparative Example 1-1 is defined as 100.

### <Over-discharge characteristics>

The cells impregnated with the electrolyte solutions, respectively, as described above were left to stand at an environmental temperature of 25°C for 12 hours (impregnation time: 12 hours) and were then subjected conditioning at an environmental temperature of 25°C under the following conditions. That is, as initial charge and discharge, constant current constant voltage charging at a charge upper limit voltage of 4.3 V and a 0.1 C rate (7 mA) and discharging at a 0.2 C rate constant current until a discharge termination voltage of 3.0 V were performed, and then, a charge and discharge cycle performing constant current constant voltage charging at a charge upper limit voltage of 4.3 V and a 0.2 C rate and discharging at a 0.2 C rate constant current until a discharge termination voltage of 3.0 V was repeated three times. The discharge capacity at the 3rd cycle was defined as the initial capacity.

After the conditioning above, the cells in the discharged state were further discharged to 0 V with a constant resistance of 75 Ω to establish an over-discharged state and were then left to stand for 3 days. After leaving to stand, the cells were subjected again to constant current constant voltage charging at a charge upper limit voltage of 4.3 V and a 0.2 C rate at an environment temperature of 25°C and discharging at a 0.2-C rate constant current until a discharge termination voltage of 3.0 V, and the discharge capacity on that occasion was measured to determine the capacity retention rate relative to the initial capacity. Table 2 below shows "discharge capacity retention rate after over-discharge" that is the relative value of the capacity retention rate in each of Examples and Comparative Examples when the capacity retention rate in Comparative Example 1-1 is defined as 100.

**[Table 2]**

| | Electrolyte solution No. | Positive electrode active material | Negative electrode active material | -30°C discharge capacity | Initial discharge capacity | Discharge capacity retention rate after over-discharge |
|---|---|---|---|---|---|---|
| Example 1-1 | Electrolyte solution 1-1 | LiNi_{0.8}Co_{0.1}Mn_{0.1}O₂ | Graphite | 104 | 118 | 132 |
| Example 1-2 | Electrolyte solution 1-2 | | | 110 | 120 | 137 |
| Example 1-3 | Electrolyte solution 1-3 | | | 113 | 120 | 138 |
| Example 1-4 | Electrolyte solution 1-4 | | | 113 | 119 | 137 |
| Example 1-5 | Electrolyte solution 1-5 | | | 113 | 120 | 137 |
| Example 1-6 | Electrolyte solution 1-6 | | | 114 | 120 | 138 |
| Example 1-7 | Electrolyte solution 1-7 | | | 108 | 119 | 135 |
| Example 1-8 | Electrolyte solution 1-8 | | | 107 | 119 | 134 |
| Comparative Example 1-1 | Comparative Electrolyte solution 1-1 | | | 100 | 100 | 100 |
| Comparative Example 1-2 | Comparative Electrolyte solution 1-2 | | | 95 | 119 | 137 |
| Comparative Example 1-3 | Comparative Electrolyte solution 1-3 | | | 97 | 117 | 130 |

Comparison of the above results demonstrates that, as for the discharge capacities at low temperature, the discharge capacities of Comparative Examples 1-2 and 1-3 wherein succinonitrile was used are lower than of Comparative Example 1-1, but the discharge capacity each of the electrolyte solutions wherein the (I) was used is significantly increased to suppress an increase in the initial resistance.

Furthermore, comparison of the initial discharge capacities demonstrates that the initial discharge capacity of the examples wherein the (I) was used is equivalent to those of Comparative Examples 1-2 and 1-3, even where the impregnation time is long. This is a result of suggesting that elution of copper as the negative electrode current collector is suppressed.

In addition, comparison of the discharge capacity retention rates after over-discharge demonstrates that, with the use of the (I), the discharge capacity retention rate of the examples after over-discharge state has a capacity equivalent to that of Comparative Example 1-2, even when an over-discharged state had become. This is a result of suggesting that elution of copper as the negative electrode current collector is suppressed.

When the active material includes a carbon material, since the potential of the negative electrode at a stage where charging is not made is higher than or equal to the elution potential of copper, copper dissolution begins from the moment when the electrolyte solution is injected. It is generally known that the eluted copper deposits on the positive electrode or deposits on the negative electrode during charging, which reduces the capacity of the cell.

## Claims

1. A non-aqueous electrolyte solution comprising:
(I) a compound represented by the following general formula [1a] ;
(II) a solute; and
(III) a non-aqueous organic solvent.
M⁺[X-S(=O)₂-N-C(=O)-R]⁻ [1a]
(in the general formula [1a], X represents a halogen atom, R represents -CN group or -OCN group, and M⁺ represents an alkali metal ion).

2. The non-aqueous electrolyte solution according to Claim 1, wherein X in the general formula [1a] is a fluorine atom.

3. The non-aqueous electrolyte solution according to Claim 1 or 2, wherein the concentration of the (I) is 0.01 to 5.00 mass% with respect to the total amount of the electrolyte solution.

4. The non-aqueous electrolyte solution according to any one of Claims 1 to 3, wherein the (II) is at least one selected from the group consisting of LiPF₆, LiBF₄, LiSbF₆, LiAsF₆, LiClO₄, LiCF₃SO₃, LiC₄F₉SO₃, LiAlO₂, LiAlCl₄, LiCl, and LiI or at least one selected from the group consisting of NaPF₆, NaBF₄, NaSbF₆, NaAsF₆, NaClO₄, NaCF₃SO₃, NaC₄F₉SO₃, NaAlO₂, NaAlCl₄, NaCl, and NaI.

5. The non-aqueous electrolyte solution according to any one of Claims 1 to 4, wherein the (III) is at least one selected from the group consisting of a cyclic ester, a chain ester, a cyclic ether, a chain ether, a sulfone compound, a sulfoxide compound, and an ionic liquid.

6. The non-aqueous electrolyte solution according to Claim 5, wherein the (III) is a cyclic ester, and the cyclic ester is a cyclic carbonate.

7. The non-aqueous electrolyte solution according to Claim 5, wherein the (III) is a chain ester, and the chain ester is a chain carbonate.

8. The non-aqueous electrolyte solution according to any one of Claims 1 to 7, further comprising at least one additive selected from the group consisting of difluoro(oxalato)borate, bis(oxalato)borate, tetrafluoro(oxalato)phosphate, difluorobis(oxalato)phosphate, tris(oxalato)phosphate, difluorophosphate, fluorosulfonate, bis(fluorosulfonyl)imide salt, vinylene carbonate, an oligomer of vinylene carbonate (number average molecular weight in terms of polystyrene: 170 to 5000), vinyl ethylene carbonate, fluoroethylene carbonate, 1,6-diisocyanatohexane, ethynylethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylene methane disulfonate, 1,2-ethanedisulfonic acid anhydride, methanesulfonyl fluoride, tris(trimethylsilyl)borate, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, and cyclohexylbenzene.

9. The non-aqueous electrolyte solution according to any one of Claims 1 to 8, to be used in a non-aqueous electrolyte solution secondary battery including a current collector containing copper.

10. A non-aqueous electrolyte solution secondary battery at least comprising a positive electrode, a negative electrode, a separator, and the non-aqueous electrolyte solution according to any one of Claims 1 to 9.

11. The non-aqueous electrolyte solution secondary battery according to Claim 10, wherein the negative electrode includes copper as a current collector.
